# EUROPÄISCHE PATENTSCHRIFT

(11) **EP 1 197 539 B1**
(45) Veröffentlichungstag und Bekanntmachung des Hinweises auf die Patenterteilung: **02.08.2006**
(21) Anmeldenummer: 01121084.6
(22) Anmeldetag: 03.09.2001
(51) Int. Cl.: C09D 183/14, C09D 183/10, C09D 183/08

(54) **Verfahren zur Herstellung Fluoroalkyl funktionalisierter Silanbeschichtungen**
Process for preparing fluoroalkyl functional group containing silane coatings
Procédé de préparation de revêtements de silanes ayant des groupes fonctionnels fluoroalkyles

(30) Priorität: 10.10.2000 DE 10050064
(43) Veröffentlichungstag der Anmeldung: 17.04.2002
(73) Patentinhaber: Fraunhofer-Gesellschaft zur Förderung der angewandten Forschung e.V., 80686 München (DE)
(72) Erfinder: Kron, Johanna, 97776 Eussenheim (DE); Deichmann, Karl, 97084 Würzburg (DE); Schottner, Gerhard, 91560 Heilsbronn (DE)

(56) Entgegenhaltungen:
- EP-A- 0 610 831
- US-A- 5 644 014

## Beschreibung

Die Erfindung betrifft ein Verfahren zur Herstellung Fluoroalkyl funktionalisierter hybridpolymerer Beschichtungen mit niedriger Oberflächenenergie und geringer Verschmutzungsneigung.

Funktionelle hybridpolymere Beschichtungen gewinnen zunehmend an Bedeutung in Anwendungsfeldern, in denen kratz-, abrieb- und chemikalienbeständige oder auch UV-absorbierende Eigenschaften gefordert sind. Ebenso finden Beschichtungen dieser Art im Korrosionsschutz oder in der Wärmeisolierung verstärkt Anwendung.

Wichtige Kriterien für die Güte solcher Beschichtungen sind hierbei eine geringe Oberflächenenergie und eine geringe Neigung zur Verschmutzung. Die Anwendung derartiger Beschichtungen ist für eine Vielzahl von Substraten möglich. Hierzu zählen Kunststoffe, Metalle, Gläser, Keramiken und Holz, aber auch weitere nichtmetallische anorganische oder organische Substrate.

Besonders hervorzuheben unter diesen Beschichtungen sind Fluoroalkyl funktionalisierte Silane, die einen dauerhaften Schutz der Oberfläche gegen Verschmutzungen jeglicher Art ermöglichen.

Nach dem Stand der Technik sind hochkratz- und abriebbeständige Beschichtungen aus der DE 38 28 098 bekannt. Diese weisen jedoch den Nachteil auf, daß die optischen Eigenschaften der Oberflächen den hohen Ansprüchen an solche Beschichtungen oft nicht genügen, da es zur Ausbildung von optischen Mängeln (sog. Fischaugen) kommt.

Die DE 198 40 009 beschreibt die Herstellung UVhärtender Sole, die sich zwar sehr gut durch Fluten und - für nichtmetallische Substrate - auch durch Tauchen applizieren lassen, der Sprühauftrag insgesamt (wichtig für geometrisch komplexe Teile) und das Tauchen von Metallsubstraten ist hier jedoch nicht möglich, da die Sole durch Kontakt mit Metallen sehr schnell vergelen.

Die DE 41 18 184 beschreibt eine Beschichtungszusammensetzung auf der Basis fluorhaltiger anorganischer Polykondensate. Bei dem hier beschriebenen Herstellungsverfahren dieser Beschichtungen stellt die Zugabe der fluorierten Ausgangsverbindungen einen sehr kritischen Verfahrenspunkt dar. Die Zugabe kann dabei nur zu einem exakt definierten Zeitpunkt erfolgen, zwischen einem Vorkondensationsschritt und dem Schritt der Endkondensation, wodurch der Kondensationsprozess unterbrochen werden muss und das Verfahren dadurch aufwendiger wird.

Der Erfindung liegt daher die Aufgabe zugrunde, ein Verfahren zur Herstellung verschmutzungsarmer Beschichtungen zu schaffen, das diese Nachteile des Standes der Technik beseitigt.

Die Aufgabe wird durch ein Verfahren mit den Merkmalen aus dem Patentanspruch 1 gelöst. Durch Anspruch 16 wird ein Verfahren zur Herstellung einer Antihaft-Beschichtung auf Substraten gelöst. Die Unteransprüche 2 bis 15 enthalten vorteilhafte Weiterbildungen.

Das erfindungsgemäße Verfahren zur Herstellung einer Beschichtungszusammensetzung beruht auf einer hydrolytischen Kondensation von folgenden Komponenten:
a) Mindestens ein organisch modifiziertes Silan der allgemeinen Formel I,

   R'ₘSiX₍₄₋ₘ₎

   Hierbei ist X ausgewählt aus der Gruppe
   Wasserstoff, Halogen, Alkoxy, Acyloxy, Alkylcarbonyl, Alkoxycarbonyl oder -NR"₂, mit R" gleich Wasserstoff und/oder Alkyl
   und R' ist ausgewählt aus der Gruppe
   Alkyl, Alkenyl, Alkinyl, Aryl, Arylalkyl, Alkylaryl, Arylalkenyl, Alkenylaryl, Arylalkinyl oder Alkinylaryl.
   Die Reste R' können dabei durch 0- und/oder durch S-Atome und/oder durch die Gruppe -NR" unterbrochen sein und einen oder mehrere Substituenten aus der Gruppe der Halogene und der gegebenenfalls substituierten Amino-, Amid-, Aldehyd-, Keto-, Alkylcarbonyl-, Carboxy-, Mercapto-, Cyano-, Hydroxy-, Alkoxy-, Alkoxycarbonyl-, Sulfonsäure-, Phosphorsäure-, (Meth)Acryloxy-, Epoxy- oder Vinyl-Gruppen tragen können.
   m kann dabei die Werte 1, 2 oder 3 annehmen.
   Dabei wird mindestens ein organisch modifiziertes Silan der Formel I mit mindestens einem Rest R', der mindestens eine (poly)addierbare und/oder polymerisierbare Gruppe enthält, in einer Menge von 2 bis 95 Mol-%, bezogen auf die Gesamtmolzahl der monomeren Ausgangskomponenten, eingesetzt.
b) Mindestens eine Metallverbindung der allgemeinen Formeln II und/oder III,

   AlR₃ (II) MR₄ (III)

   in denen die Reste gleich oder verschieden sind und folgende Bedeutung haben:
   M = Zirkonium oder Titan und R ist ausgewählt aus der Gruppe Halogen, Alkyl, Alkoxy, Acyloxy, Hydroxy oder einem Chelatliganden, wobei die Verbindungen der Formel II und/oder III in einer Menge von 5 bis 75 Mol-% bezogen auf die Gesamtmolzahl der monomeren Ausgangskomponenten, eingesetzt werden.
c) Mindestens ein organisch modifiziertes Silan der allgemeinen Formel IV,

   Rₘ"'X₍₄₋ₘ₎ (IV)

   in der die Reste gleich oder verschieden sind und folgende Bedeutung haben:
   R"' = Alkyl, Alkenyl, Alkinyl, Aryl, Arylalkyl, Alkylaryl, Arylalkenyl, Alkenylaryl, Arylalkinyl oder Alkinylaryl.
   Die Reste R"' können dabei durch 0- und/oder durch S-Atome und/oder durch die Gruppe -NR" unterbrochen sein und einen oder mehrere Substituenten aus der Gruppe der Halogene und der gegebenenfalls substituierten Amino-, Amid-, Aldehyd-, Keto-, Alkylcarbonyl-, Carboxy-, Mercapto-, Cyano-, Hydroxy-, Alkoxy-, Alkoxycarbonyl-, Sulfonsäure-, Phosphorsäure-, (Meth)Acryloxy-, Epoxy- oder Vinyl-Gruppen tragen können. Dabei ist der Rest R"' zumindestens teilweise fluoriert.
   Diese Reste R"' können beispielsweise durch eine Kondensation von silanhaltigen Reagenzien mit folgenden kommerziell erhältlichen Reagenzien Heptafluorobuttersäure, 1H,1H-Heptafluoro-1-butanol, 1H,1H,7H-Dodecafluoro-1-heptanol, Perfluorhepatansäure, Pentadecafluorooctansäure oder Perfluorononansäure gebildet sein.
   X ist ausgewählt aus der Gruppe Wasserstoff, Halogen, Alkoxy, Acyloxy, Alkylcarbonyl, Alkoxycarbonyl oder - NR"₂, mit R" gleich Wasserstoff und/oder Alkyl.
   m kann dabei Werte von 1, 2 oder 3 annehmen.

Beispielhafte Verbindungen vom Typ IV sind 1H,1H,1H, 1H-Perfluorooctyldimethylchlorosilan, (3,3,3-Trifluoropropyl)dichloromethylsilan und (3,3,3-Trifluoropropyl)dimethylmethoxysilan.

Die Verbindungen der allgemeinen Formel IV werden dabei in einer Menge von 0,05 bis 50 Mol-% bezogen auf die Gesamtmolzahl der monomeren Ausgangskomponenten eingesetzt.

Wesentlich für die Durchführung des Verfahrens ist es nun, dass die Möglichkeit besteht, die hydrolytische Kondensation der Komponenten a) - c) in der Weise durchzuführen, dass man entweder die Verbindung(en) der Formel IV vor der Wasser- oder Feuchtigkeitszugabe mit den Verbindungen der Formel I und II und/oder III mischt und dann die Verbindungen der Formel I, II und/oder III und IV gemeinsam hydrolysiert und kondensiert, oder man hydrolysiert und kondensiert zuerst die Verbindungen der Formel I und II und/oder III und gibt dann die Verbindung(en) der Formel IV zum resultierenden Kondensat. Die Zugabe zu einem exakten Zeitpunkt während des Verfahrens ist daher erfindungsgemäß nicht mehr notwendig, was eine erhebliche Vereinfachung des technischen Verfahrensablaufs darstellt.

Ein weiterer wesentlicher Punkt ist, dass nach Zugabe der Verbindungen der Formel IV die resultierende Mischung mindestens 4 Stunden, bevorzugt 8 bis 12 Stunden, bei Temperaturen von mindestens 20°C reagieren kann. Überraschenderweise erhält man durch diese Prozeßführung die Sole, welche zu Schichten mit besonders hoher optischer Qualität führen und keine Benetzungsprobleme (sog. Fischaugen) mehr aufweisen. Oberflächen derartiger Schichten zeigen Randwinkel von mehr als 100° gegnüber Wasser, ca. 90 ° gegen CH₂I₂ und Oberflächenenergien ≤ 20 mN/m. Eine derartige Reaktionsführung ist z.B. mit hydrolytischen Kondensaten nach DE 38 28 098 aufgrund der sehr geringen Topfzeiten dieser Materialien (maximal 8 h) nicht möglich.

Weiter wird bei dem erfindungsgemäßen Verfahren während oder nach der hydrolytischen Kondensation ein mit dem Rest R' der Verbindung der allgemeinen Formel I polyaddierbares und/oder copolymerisierbares Monomer und/oder Oligomer und/oder Prepolymer in einer Menge von 2 bis 70 Mol-% bezogen auf die Summe der Verbindungen I bis IV zugesetzt.

Als vorteilhafte Weiterbildung kann bei dem erfindungsgemäßen Verfahren mindestens eine weitere Komponente eingesetzt werden. Diese sind ausgewählt aus im Rekationsmedium gegebenenfalls löslichen schwerflüchtigen Oxiden oder derartigen schwerflüchtige Oxide bildenden Verbindungenn von Elementen der Hauptgruppen Ia bis Va oder deren Nebengruppen IIb, IIIb, Vb bis VIIIb des Periodensystems mit Ausnahme von Aluminium.

Bevorzugt wird die hydrolytische Kondensation in Anwesenheit eines Kondensationskatalysators und/oder eines Lösungsmittels durchgeführt.

Eine weitere vorteilhafte Weiterbildung des Verfahrens stellt die Zugabe feuchtigkeitsbeladener Adsorbentien, wasserhaltiger organischer Lösungsmittel, Salzhydraten oder Wasser bildender Systeme dar, mit denen die zur hydrolytischen Kondensation benötigte Wassermenge dem Prozess zugeführt wird.

Bevorzugt wird vor, während oder nach der hydrolytischen Kondensation mindestens ein Additiv zugegeben, das ausgewählt ist aus der Gruppe der organischen Verdünnungsmittel, Verlaufmittel, Farbstoffe, UV-Stabilisatoren, Füllstoffe, Viskositätsregler, Gleitmittel, Netzmittel, Antiabsetzmittel und Oxidationsinhibitoren.

Das Verfahren kann vorzugsweise weitergebildet werden, indem vor, während oder nach der hydrolytischen Kondensation mindestens ein Pigment bzw. Partikel mit einer Teilchengröße von 1 bis 6 µm und in einer Menge von 0.5 bis 8 Gew.-% zugegeben wird. Die Eintragung in die gebrauchsfertigen Sole kann dabei mittels üblicher Dispergierverfahren erfolgen. Beispiele solcher Pigmente bzw. Partikel sind nach verschiedenen Verfahren hergestellt Kieselsäuren, wie sie im Handel erhältlich sind.

Hierdurch läßt sich eine noch geringere Verschmutzungsneigung feststellen. Anhand von Beispiel 5 wird dieser Effekt näher beschrieben und demonstriert.

Vorzugsweise wird die Verbindung der Formel I in einer Menge von 20 bis 90 Mol-% bezogen auf die Gesamtmolzahl der monomeren Ausgangskomponenten und die Verbindungen der Formel II und/oder III in einer Menge von 5 bis 60 Mol-% bezogen auf die Gesamtmolzahl der monomeren Ausgangskomponenten zugegeben. Für die Verbindungen der Formel IV sind Konzentrationen von 0,1 bis 10 Mol-% bezogen auf die Gesamtmolzahl der monomeren Ausgangskomponenten bevorzugt.

Bevorzugt wird nach der Zugabe der Verbindungen der Formel IV die resultierende Mischung mindestens 4 Stunden bei einer Temperatur von mindestens 40 °C gerührt, besonders bevorzugt mindestens 24 Stunden bei einer Temperatur von mindestens 10 °C.

Bevorzugt werden als Reste R"' fluorierte oder perfluorierte aliphatische und/oder aromatische Reste eingesetzt.

Als zusätzliche vorteilhafte Weiterbildung des Verfahrens wird der Beschichtungszusammensetzung gemäß einem oder mehreren der Ansprüche 1 bis 14, gegebenenfalls mindestens ein Härtungskatalysatoren zugesetzt, anschließend die Beschichtungszusammensetzung auf ein Substrat aufgebracht und chemisch, thermisch oder strahlungsinduziert gehärtet.

Die erfindungsgemäß hergestellten Sole eignen sich auch hervorragend als Matrix für lösliche Farbstoffe, anorganische und organische Farbpigmente sowie Mischungen der verschiedenen Farbkörper in hohen Konzentrationen. Resultierende Schichten zeichnen sich durch sehr gute optische Qualität unter Beibehaltung der oben beschriebenen Oberflächeneigenschaften auf verschiedenen Substratoberflächen aus. So wird z.B. die Herstellung eines hybriden Beschichtungsmaterials ermöglicht, das über 25 Gew.-% Farbpigmente enthalten kann und somit die für eine kommerzielle Akzeptanz nötige Deckkraft bei den vorgegebenen geringen Schichtdicken erreicht.

Anhand der nachfolgenden Figuren und Ausführungsbeispiele sollen weitere vorteilhafte Weiterbildungen des erfindungsgemäßen Verfahrens dargestellt werden.

### Beispiel 1

212,70 g 3-Glycidyloxypropyltrimethoxysilan (GPTMS), 118,98 g Phenyltrimethoxysilan (PhTMS), 22,14 g 3-Aminopropyltriethoxysilan (AMES) und 10,20 g Tridecafluoro-1, 1,2,2-tetrahydrooctyl-1-triethoxysilan (F13-Silan) werden unter Eiskühlung gerührt. 98,54 g Aluminiumtrisekundärbutylat (Al-s.but) werden in einem separaten Glaskolben mit 105,68 g 2-Butoxyethanol vermischt, langsam mit 52,06 g Acetylaceton versetzt und zur Reaktionsmischung gegeben. Dann werden 128,8 g destilliertes Wasser sehr langsam zugegeben. Nach 2 Stunden Rühren bei Raumtemperatur werden 63,28 g Epoxidharz und 1,27 g eines Verlaufsmittels zugesetzt, Danach läßt man das Reaktionsgemisch 24 Stunden bei 25 °C unter Rühren weiterreagieren. Zur Einstellung der Lackviskosität (ca. 10 mPa*s) können jetzt übliche Lacklösemittel zugegeben werden.

Das so erhaltene Sol wird durch übliche Beschichtungsverfahren wie Tauch- oder Sprühbeschichtung auf verschiedene Substrate aufgetragen. Die thermische Aushärtung des Schichtmaterials erfolgte bei 130 bis 200 °C, mit Aushärtungszeiten zwischen 20 min und 2 h. Entsprechend hergestellte Überzüge sind farblos, von sehr guter optischer Qualität (keine Benetzungsprobleme) und weisen sehr gute initiale Haftung auf (Gitterschnitt-Test nach ASTM 3359: B 5; z.B. auf Glas oder verschiedenen Metallsubstraten). Die guten Schichteigenschaften bleiben auch nach verschiedenen Bewitterungstests wie z.B. der Kondenswasserklimaprüfung nach DIN 50017 erhalten. Diese Oberflächen zeigen Randwinkel von 96° gegenüber Wasser, 76° gegen CH₂l₂, und Oberflächenenergien 20 mN/m.

### Beispiel 2

307,24 g GPTMS, 39,66 g PhTMS, 22,14 g AMES und 6,1 g 1H,1H,2H,2H-Perfluoroalkyl-1-triethoxysiian (F13-21-Silan) werden unter Eiskühlung gerührt. In einem separaten Glaskolben werden 98,54 g Al-s.but mit 105,68 g 2-Butoxyethanol vermischt, langsam mit 52,06 g Acetessigsäureethylester umgesetzt und zur Reaktionslösung gegeben. Dann werden 128,8 g destilliertes Wasser unter Eiskühlung sehr langsam hinzugefügt. Nach 2 Stunden Rühren bei Raumtemperatur wird 63,28 g Epoxidharz und 1,27 g eines Verlaufsmittels versetzt. Jetzt läßt man die Reaktionsmischung 4 Stunden bei 40 °C unter Rühren weiterreagieren. Zur Einstellung der Lackviskosität (ca. 10 mPa*s) können nun übliche Lacklösemittel hinzugefügt werden.

Das Beschichtungsverfahren und die Aushärtung der Schichten ist analog zu Beispiel 1. Entsprechend hergestellte Überzüge sind ebenfalls farblos, von sehr guter optischer Qualität (keinerlei Benetzungsprobleme) und zeigen sehr gute Haftung auch nach verschiedenen Bewitterungstests (z.B. Gitterschnitt-Test nach ASTM 3359 ergibt mit B 5 den besten Wert auch noch nach der Kondenswasserklimaprüfung gemäß DIN 50017 auf Glas oder verschiedenen Metallsubstraten). Diese Oberflächen zeigen Randwinkel von 102° gegenüber Wasser, 90° gegen CH₂l₂ und Oberflächenenergien ≤ 14 mN/m.

### Beispiel 3

307,24 g GPTMS, 41,66 g Tetraethoxysilan, 22,14 g AMES und 6,1 g 1H,1H,2H,2H-Perfluoroalkyl-1-triethoxysilan (F13-21-Silan) werden mit 98,54 g Als.but, 105,68 g 2-Butoxyethanol, 52,06 g Acetessigsäureethylester, 128,8 g destilliertem Wasser, 63,28 g Epoxidharz und 1,27 g eines Verlaufmittels analog Beispiel 2 umgesetzt und verarbeitet.

Die resultierenden Schichten zeigen sehr gute Haftung (z.B. Gitterschnitt-Test nach ASTM 3359 ergibt mit B5 den besten Wert) und Randwinkel von 105° gegenüber Wasser, 83° gegen CH₂I₂ und Oberflächenenergien von 16 mN/m.

### Beispiel 4

Die Herstellung der Beschichtungslösung und die Applikation erfolgt wie unter Beispiel 1 oder 2 beschrieben. Als perfluoriertes Silan werden jedoch 6,10 g 1H,1H,2H,2H-Perfluorodecyl-1-triethoxysilan (F17-Silan) verwendet. Die resultierenden Schichten zeigen eine noch geringere Verschmutzungsneigung bei ansonsten gleichbleibend guten Schichteigenschaften. Randwinkel von 103° gegenüber Wasser, 91° gegen CH₂l₂ und Oberflächenenergien :≤ 13 mN/m wurden ermittelt.

### Beispiel 5

Es werden 98,54 g Al-s.but und 105,68 g 2-Butoxyethanol gerührt, langsam mit 52,06 g Acetessigsäureethylester versetzt und unter Eiskühlung zu einer Mischung aus 212,70 g GPTMS, 118,98 g PhTMS und 22,14 g AMES gegeben. Der Zusatz von 128,8 g destilliertem Wasser erfolgt langsam unter Kühlung. Das Hydrolysat wird 2 Stunden bei Raumtemperatur gerührt. Danach werden 63,28 g Epoxidharz, 1,27 g eines Verlaufsmittels und anschließend 6,10 g 1H,1H,2H,2H-Perfluoroalkyl-1-triethoxysilan (F13-21-Silan) zugesetzt. Jetzt läßt man das Reaktionsgemisch 4 Stunden bei 40 °C unter Rühren weiterreagieren. Die weitere Verarbeitung und Applikation erfolgte wie unter Beispiel 2 beschrieben. Das Leistungsverhalten der resultierenden Überzüge glich den nach Beispiel 2 erhaltenen Proben. Eine analoge Vorgehensweise ist auch für die beiden anderen Fluorsilane unter Beibehaltung der Eigenschaften möglich.

### Beispiel 6

Die Herstellung der Beschichtungslösung erfolgt analog den Beispielen 1 bis 5. In die gebrauchsfertigen Solen werden 0,5-8 % Pigmente mit einer Teilchengröße von 1-6 µm (z.B. handelsübliche Kieselsäuren) mittels üblicher Dispergierverfahren eingearbeitet. Die restliche Verarbeitung wird wie unter Beispiel 1 bis 4 beschrieben durchgeführt. Die resultierenden Schlichten sind - abhängig vom Pigmentanteil - transparent oder transluzent und zeigen eine weiterhin verringerte Verschmutzungsneigung.

Beschreibt man etwa eine pigmentierte und eine nicht pigmentierte Oberfläche mit einem handelsüblichen wasserlöslichen Folienstift so setzen zwar beide Oberflächen die Benetzbarkeit durch die Tinte so stark herab, dass kein einheitlicher Film ausgebildet wird und sich die Tinte zu Tropfen zusammenzieht, die einzelnen Tropfen sind jedoch auf der pigmentierten Oberfläche mit 25-80 µm um eine ganze Größenordnung kleiner als auf der nicht pigmentierten Oberfläche mit 600-800 µm. Daher ist eine entsprechend pigmentierte Schicht nicht nur leichter zu reinigen, sondern erscheint auch ohne Reinigung weniger verschmutzt als eine pigmentfreie Schicht.

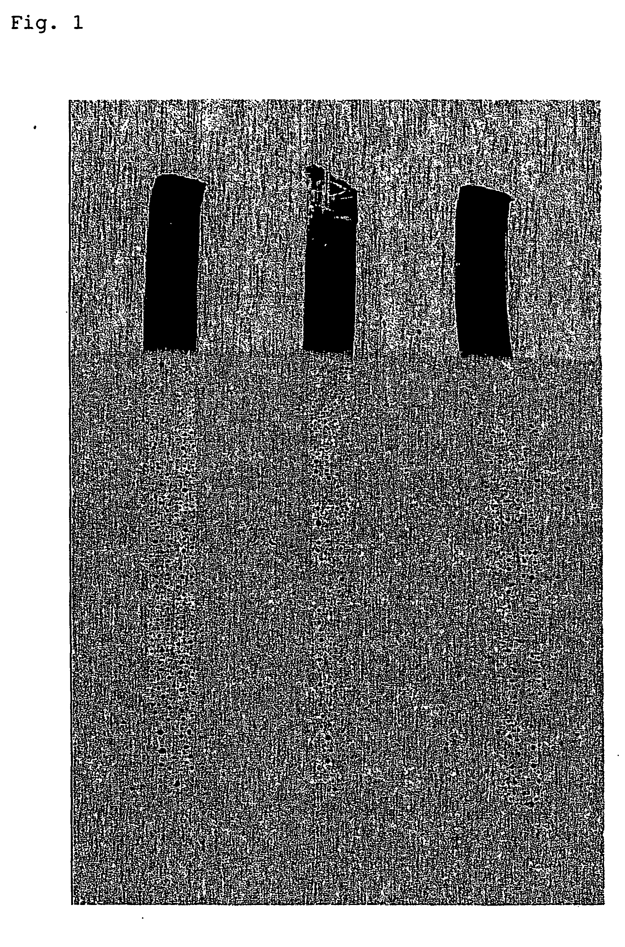

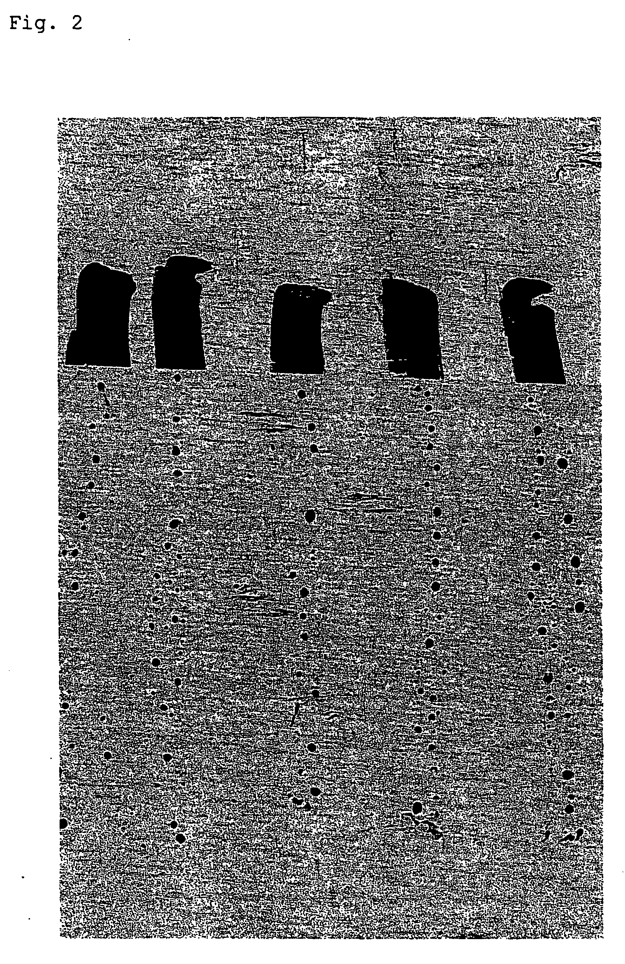

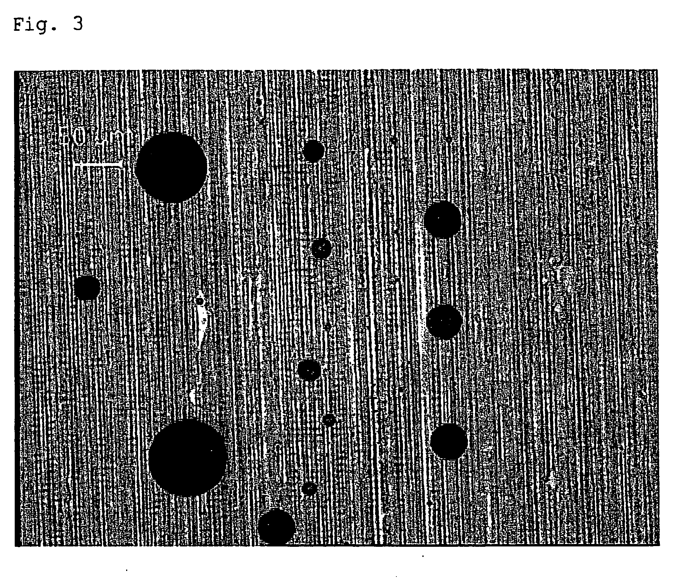

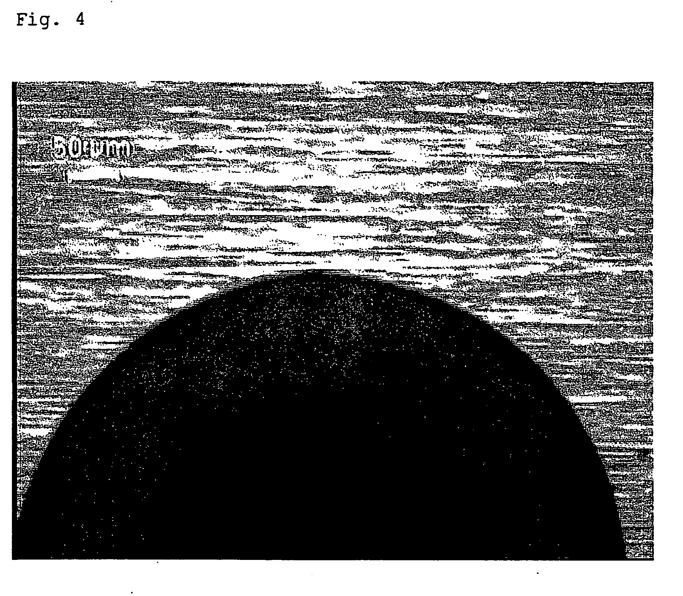

In Fig. 1 bis 4 wird dieser Effekt anschaulich demonstriert. Hier wurden im Vergleich pigmentierte (Fig. 1) und nicht-pigmentierte (Fig. 2) Schichten aus Kunststoff, Edelstahl und Glas mit einem handelsüblichen wasserlöslichen Folienstift beschrieben. Zwar vermögen beide Oberflächen die Benetzung durch die Tinte so stark herabzusetzen, dass kein einheitlicher Film ausgebildet wird und sich die Tinte zu Tropfen zusammenzieht, die einzelnen Tropfen sind jedoch auf der pigmentierten Oberfläche (Fig. 3) mit 25-80 µm um eine ganze Größenordnung kleiner als auf der nicht pigmentierten Oberfläche (Fig. 4) mit 600-800 µm. Daher ist eine entsprechend pigmentierte Schicht nicht nur leichter zu reinigen, sondern erscheint auch ohne Reinigung weniger verschmutzt als eine pigmentfreie Schicht.

### Beispiel 7

In analog zu Beispiel 1 bis 6 hergestellten Solen werden jeweils 15 g Orasol® Blau GN und 6 g Orasol® Rosa 5 BLG gelöst. Es besteht aber ebenso die Möglichkeit, das die Perfluoroalkylsilan-Verbindungen erst zu den farbigen Solen zugegeben werden, wenn die entsprechenden Rührzeiten nachgeschaltet werden (4 h bei 40 °C oder 16 bis 24 h bei RT). Die Applikation und Aushärtung der Farbstofflösung erfolgt wie in Beispiel 1 beschrieben. Die resultierenden, transparenten (transluzent) Schichten sind kobaltblau und zeigen ansonsten die gleichen Eigenschaften wie die farblosen Schichten aus Beispiel 1 bis 6. Mit Farbstoffen bzw. Farbstoffgemischen, welche in wäßrig, alkoholischen Medien löslich sind können nahezu alle Farbtöne in verschiedenen Farbtiefen hergestellt werden. Die Herstellung kobaltblauer Schichten ist nur eines von unzähligen Beispielen.

### Beispiel 8

250 g der Farbpigmentmischung RAL 6024 (Verkehrsgrün) werden in einem Sol, hergestellt nach Beispiel 1 bis 6 dispergiert. Das pigmentierte Sol wird analog zu Beispiel 1 weiterverarbeitet. Es besteht aber ebenso die Möglichkeit, das die Perfluoroalkylsilan-Verbindungen erst zu den farbigen Solen zugegeben werden, wenn die entsprechenden Rührzeiten nachgeschaltet werden (4 h bei 40 °C oder 16 bis 24 h bei RT). Die resultierenden opaken, grünen Schichten zeigen den farblosen Schichten aus Beispiel 1 bis 6 entsprechende Oberflächeneigenschaften und sind ebenso beständig. Auch hier ist die Herstellung der grünen Schichten mit dem Farbton RAL 6024 nur eines von unzähligen Beispielen dafür, dass durch Mischung verschiedener Farbpigmente transluzent bis opake Farbschichten in nahezu allen Farbtönen und in verschiedenen Deckungsgraden hergestellt werden können.

## Patentansprüche

1. Verfahren zur Herstellung einer Beschichtungszusammensetzung mit folgenden Merkmalen:
man führt durch Zugabe von Wasser oder Feuchtigkeit eine hydrolytische Kondensation mindestens der folgenden Komponenten durch:
a) mindestens ein organisch modifiziertes Silan der allgemeinen Formel I,
R'ₘSiX₍₄₋ₘ₎ (I)
in der die Reste gleich oder verschieden sind und folgende Bedeutung haben:
X = Wasserstoff, Halogen, Alkoxy, Acyloxy, Alkylcarbonyl, Alkoxycarbonyl oder -NR"₂, mit R" gleich Wasserstoff und/oder Alkyl;
R' = Alkyl, Alkenyl, Alkinyl, Aryl, Arylalkyl, Alkylaryl, Arylalkenyl, Alkenylaryl, Arylalkinyl oder Alkinylaryl, wobei diese Reste durch 0- und/oder durch S-Atome und/oder durch die Gruppe -NR" unterbrochen sein können und einen oder mehrere Substituenten aus der Gruppe der Halogene und der gegebenenfalls substituierten Amino-, Amid-, Aldehyd-, Keto-, Alkylcarbonyl-, Carboxy-, Mercapto-, Cyano-, Hydroxy-, Alkoxy-, Alkoxycarbonyl-, Sulfonsäure-, Phosphorsäure-, (Meth)Acryloxy-, Epoxy- oder Vinyl-Gruppen tragen können;
m = 1, 2 oder 3,
wobei man mindestens ein organisch modifiziertes Silan der Formel I mit mindestens einem Rest R', der mindestens eine (poly)addierbare und/oder polymerisierbare Gruppe enthält, in einer Menge von 2 bis 95 Mol-%, bezogen auf die Gesamtmolzahl der monomeren Ausgangskomponenten, einsetzt;
b) mindestens eine Metallverbindung der allgemeinen Formeln II und/oder III,
AlR₃ (II) MR₄ (III)
in denen die Reste gleich oder verschieden sind und folgende Bedeutung haben:
M = Zirkonium oder Titan,
R = Halogen, Alkyl, Alkoxy, Acyloxy, Hydroxy oder einen Chelatligand, wobei man die Verbindungen der Formel II und/oder III in einer Menge von 5 bis 75 Mol-%.bezogen auf die Gesamtmolzahl der monomeren Ausgangskomponenten, einsetzt;
c) mindestens ein organisch modifiziertes Silan der allgemeinen Formel IV,
Rₘ"'SiX₍₄₋ₘ₎ (IV)
in der die Reste gleich oder verschieden sind und folgende Bedeutung haben:
R"' = Alkyl, Alkenyl, Alkinyl, Aryl, Arylalkyl, Alkylaryl, Arylalkenyl, Alkenylaryl, Arylalkinyl oder Alkinylaryl, wobei diese Reste durch 0- und/oder durch S-Atome und/oder durch die Gruppe -NR" unterbrochen sein können und einen oder mehrere Substituenten aus der Gruppe der Halogene und der gegebenenfalls substituierten Amino-, Amid-, Aldehyd-, Keto-, Alkylcarbonyl-, Carboxy-, Mercapto-, Cyano-, Hydroxy-, Alkoxy-, Alkoxycarbonyl-, Sulfonsäure-, Phosphorsäure-, (Meth)Acryloxy-, Epoxy- oder Vinyl-Gruppen tragen können, wobei der Rest R"' zumindestens teilweise fluoriert ist;
X = Wasserstoff, Halogen, Alkoxy, Acyloxy, Alkylcarbonyl, Alkoxycarbonyl oder -NR"₂, mit R" gleich Wasserstoff und/oder Alkyl;
m = 1, 2 oder 3,
wobei man die Verbindungen der allgemeinen Formel IV in einer Menge von 0,05 bis 50 Mol-% bezogen auf die Gesamtmolzahl der monomeren Ausgangskomponenten einsetzt;
◆ man führt die hydrolytische Kondensation der Komponenten a) bis c) in der Weise durch, dass man entweder die Verbindung(en) der Formel IV vor der Wasser- oder Feuchtigkeitszugabe mit den Verbindungen der Formel I und II und/oder III mischt und dann die Verbindungen der Formel I, II und/oder III und IV gemeinsam hydrolysiert und kondensiert, oder man hydrolysiert und kondensiert zuerst die Verbindungen der Formel I und II und/oder III und gibt dann die Verbindung(en) der Formel IV zum resultierenden Kondensat;
◆ man lässt.nach Zugabe der Verbindungen der Formel IV die resultierende Mischung mindestens 4 Stunden bei Temperaturen von mindestens 20 °C reagieren;
◆ man gibt vor, während oder nach der hydrolytischen Kondensation ein mit dem Rest R' der Verbindung der allgemeinen Formel I polyaddierbares und/oder copolymerisierbares Monomer und/oder Oligomer und/oder Prepolymer in einer Menge von 2 bis 70 Mol-%, bezogen auf Gesamtmolzahl der monomeren Ausgangskomponenten, zu;

2. Verfahren nach Anspruch 1, **dadurch gekennzeichnet, dass** neben den Komponenten a) bis c) mindestens ein im Reaktionsmedium gegebenenfalls lösliches schwerflüchtiges Oxid oder derartiges schwerflüchtiges Oxid bildende Verbindung von Elementen der Hauptgruppen Ia bis Va oder deren Nebengruppen IIb, IIIb, Vb bis VIIIb des Periodensystems mit Ausnahme von Aluminium als weitere Komponente eingesetzt wird.

3. Verfahren nach Anspruch 1 oder 2, **dadurch gekennzeichnet dass** man die hydrolytische Kondensation in Anwesenheit eines Kondensationskatalysators durchführt.

4. Verfahren nach einem oder mehreren der Ansprüche 1 bis 3, **dadurch gekennzeichnet, dass** man die hydrolytische Kondensation in Anwesenheit eines Lösungsmittels durchführt.

5. Verfahren nach einem oder mehreren der Ansprüche 1 bis 4, **dadurch gekennzeichnet, dass** die zur hydrolytischen Kondensation eingesetzte Wassermenge mittels feuchtigkeitsbeladener Adsorbentien, wasserhaltiger organischer Lösungsmittel, Salzhydraten oder Wasser bildender Systeme eingetragen wird.

6. Verfahren nach einem oder mehreren der Ansprüche 1 bis 5, **dadurch gekennzeichnet, dass** man vor, während oder nach der hydrolytischen Kondensation eines oder mehrere Additive zugibt, die ausgewählt sind aus organischen Verdünnungsmitteln, Verlaufmitteln, Farbstoffen, UV-Stabilisatoren, Füllstoffen, Viskositätsreglern, Gleitmitteln, Netzmitteln, Antiabsetzmitteln oder Oxidationsinhibitoren.

7. Verfahren nach einem oder mehreren der Ansprüche 1 bis 6, **dadurch gekennzeichnet, dass** man vor, während oder nach der hydrolytischen Kondensation eines oder mehrere Pigmente mit einer Teilchengröße von 1 bis 6 µm und in einer Menge von 0.5 bis 8 Gew.-% zugibt.

8. Verfahren nach einem oder mehreren der Ansprüche 1 bis 6, **dadurch gekennzeichnet, dass** man vor, während oder nach der hydrolytischen Kondensation eines oder mehrere Pigmente in einer Menge von über 25 Gew.-% zugibt.

9. Verfahren nach einem oder mehreren der Ansprüche 1 bis 8, **dadurch gekennzeichnet, dass** man die Verbindung der Formel I in einer Menge von 20 bis 90 Mol-%, bezogen auf die Gesamtmolzahl der monomeren Ausgangskomponenten, zugibt.

10. Verfahren nach einem oder mehreren der Ansprüche 1 bis 9, **dadurch gekennzeichnet, dass** man die Verbindungen der Formel II und/oder III in einer Menge von 5 bis 60 Mol-%, bezogen auf die Gesamtmolzahl der monomeren Ausgangskomponenten, zugibt.

11. Verfahren nach einem oder mehreren der Ansprüche 1 bis 10, **dadurch gekennzeichnet, dass** man die Verbindungen der Formel IV in einer Menge von 0,1 bis 10 Mol-%, bezogen auf die Gesamtmolzahl der monomeren Ausgangskomponenten, zugibt.

12. Verfahren nach einem oder mehreren der Ansprüche 1 bis 11, **dadurch gekennzeichnet, dass** man nach der Zugabe der Verbindungen der Formel IV die resultierende Mischung mindestens 4 Stunden bei einer Temperatur von mindestens 40 °C reagieren lässt.

13. Verfahren nach einem oder mehreren der Ansprüche 1 bis 12, **dadurch gekennzeichnet, dass** man nach der Zugabe der Verbindungen der Formel IV die resultierende Mischung mindestens 24 Stunden bei einer Temperatur von mindestens 10 °C reagieren lässt.

14. Verfahren nach einem oder mehreren der Ansprüche 1 bis 13, **dadurch gekennzeichnet, dass** man unter c) eine Verbindung IV mit einem teilweise fluorierten aliphatischen und/oder aromatischen Rest R"' einsetzt.

15. Verfahren nach einem oder mehreren der Ansprüche 1 bis 14, **dadurch gekennzeichnet, dass** man unter c) eine Verbindung IV mit einem perfluorierten aliphatischen und/oder aromatischen Rest R"' einsetzt.

16. Verfahren zur Herstellung einer Antihaft-Beschichtung auf Substraten, **dadurch gekennzeichnet, dass** man eine Beschichtungszusammensetzung gemäß einem oder mehreren der Ansprüche 1 bis 13 fertigt, gegebenenfalls einen oder mehrere Härtungskatalysatoren zusetzt, die Beschichtungszusammensetzung auf ein Substrat aufbringt und chemisch, thermisch oder strahlungsinduziert härtet.

## Claims

1. Method for preparing a coating composition having the following features:
through the addition of water or moisture, a hydrolytic condensation of at least one of the following components is carried out:
a) at least one organically modified silane of the general formula I,
R'ₘSiX₍₄₋ₘ₎ (I)
in which the residues are the same or different and have the following meaning:
X = hydrogen, halogen, alkoxy, acyloxy, alkylcarbonyl, alkoxycarbonyl or -NR"₂, with R" equal to hydrogen and/or alkyl;
R' = alkyl, alkenyl, alkinyl, aryl, arylalkyl, alkylaryl, arylalkenyl, alkenylaryl, arylalkinyl or alkinylaryl, these residues being able to be interrupted by O atoms and/or by S atoms and/or by the group -NR" and optionally bearing one or more substituents from the group of halogens and the optionally substituted amino, amide, aldehyde, keto, alkylcarbonyl, carboxy, mercapto, cyano, hydroxy, alkoxy, alkoxycarbonyl, sulphonic acid, phosphoric acid, (meth)acryloxy, epoxy or vinyl groups;
m = 1, 2 or 3,
at least one organically modified silane of formula I being used with at least one residue R' which contains at least one (poly)addable and/or polymerisable group in an amount from 2 to 95 mol-% in relation to the total number of moles of the monomer starting components;
b) at least one metal compound of the general formula II and/or III,
AlR₃ (II) MR₄ (III)
in which the residues are the same or different and have the following meaning:
M = zirconium or titanium,
R = halogen, alkyl, alkoxy, acyloxy, hydroxy or a chelate ligand, the compounds of formula II and/or III being used in an amount from 5 to 75 mol-% in relation to the total number of moles of the monomer starting components;
c) at least one organically modified silane of the general formula IV,
Rₘ"'SiX₍₄₋ₘ₎ (IV)
in which the residues are the same or different and have the following meaning:
R"' = alkyl, alkenyl, alkinyl, aryl, arylalkyl, alkylaryl, arylalkenyl, alkenylaryl, arylalkinyl or alkinylaryl, these residues being able to be interrupted by O atoms and/or by S atoms and/or by the group -NR" and optionally bearing one or more substituents from the group of halogens and the optionally substituted amino, amide, aldehyde, keto, alkylcarbonyl, carboxy, mercapto, cyano, hydroxy, alkoxy, alkoxycarbonyl, sulphonic acid, phosphoric acid, (meth)acryloxy, epoxy or vinyl groups, the residue R"' being at least partially fluorinated;
X = hydrogen, halogen, alkoxy, acyloxy, alkylcarbonyl, alkoxycarbonyl or -NR"₂, with R" equal to hydrogen and/or alkyl;
m = 1, 2 or 3,
the compounds of the general formula IV being used in an amount from 0.05 to 50 mol-% in relation to the total number of moles of the monomer starting components;
- the hydrolytic condensation of the components a) to c) is carried out in such a way that either the compound(s) of formula IV is/are mixed with the compounds of formula I and II and/or III before the addition of water or moisture, and then the compounds of formula I, II and/or III and IV are jointly hydrolysed and condensed, or the compounds of formula I and II and/or III are first hydrolysed and condensed and then the compound(s) of formula IV is/are added to the resulting condensate;
- the mixture resulting after the addition of the compounds of formula IV is allowed to react for at least 4 hours at temperatures of at least 20°C;
- before, during or after the hydrolytic condensation, a monomer and/or oligomer and/or prepolymer which is polyaddable and/or copolymerisable with the residue R' of the compound of the general formula I is added in an amount from 2 to 70 mol-% in relation to the total number of moles of the monomer starting components.

2. Method according to claim 1, **characterised in that**, in addition to components a) to c), at least one non-volatile oxide which is optionally soluble in the reaction medium or a compound of elements of the main groups Ia to Va or their side groups IIb, IIIb, Vb to VIIIb of the periodic table which forms such a non-volatile oxide, with the exception of aluminium, is used as an additional component.

3. Method according to claim 1 or 2, **characterised in that** the hydrolytic condensation is carried out in the presence of a condensation catalyst.

4. Method according to one or more of claims 1 to 3, **characterised in that** the hydrolytic condensation is carried out in the presence of a solvent.

5. Method according to one or more of claims 1 to 4, **characterised in that** the amount of water used for the hydrolytic condensation is supplied by means of moisture-laden adsorbents, water-containing organic solvents, salt hydrates or water-forming systems.

6. Method according to one or more of claims 1 to 5, **characterised in that**, before, during or after the hydrolytic condensation, one or more additives is/are added which are selected from organic diluents, flow-control agents, colorants, UV stabilisers, fillers, viscosity regulators, lubricants, wetting agents, suspension agents or oxidation inhibitors.

7. Method according to one or more of claims 1 to 6, **characterised in that**, before, during or after the hydrolytic condensation, one or more pigments having a particle size from 1 to 6 µm is added in an amount from 0.5 to 8 wt-%.

8. Method according to one or more of claims 1 to 6, **characterised in that**, before, during or after the hydrolytic condensation, one or more pigments is added in an amount of more than 25 wt-%.

9. Method according to one or more of claims 1 to 8, **characterised in that** the compound of formula I is added in an amount of 20 to 90 mol-%, in relation to the total number of moles of the monomer starting components.

10. Method according to one or more of claims 1 to 9, **characterised in that** the compounds of formula II and/or III are added in an amount of 5 to 60 mol-% in relation to the total number of moles of the monomer starting components.

11. Method according to one or more of claims 1 to 10, **characterised in that** the compounds of formula IV are added in an amount of 0.1 to 10 mol-% in relation to the total number of moles of the monomer starting components.

12. Method according to one or more of claims 1 to 11, **characterised in that**, after the addition of the compounds of formula IV, the resulting mixture is allowed to react for at least 4 hours at a temperature of at least 40°C.

13. Method according to one or more of claims 1 to 12, **characterised in that**, after the addition of the compounds of formula IV, the resulting mixture is allowed to react for at least 24 hours at a temperature of at least 10°C.

14. Method according to one or more of claims 1 to 13, **characterised in that** a compound IV with a partially fluorinated aliphatic and/or aromatic residue R"' is used as c).

15. Method according to one or more of claims 1 to 14, **characterised in that** a compound IV with a perfluorinated aliphatic and/or aromatic residue R"' is used as c).

16. Method for preparing a non-stick coating on substrates, **characterised in that** a coating composition according to one or more of claims 1 to 13 is prepared, optionally one or more hardening catalysts are added, the coating composition is applied to a substrate and hardened chemically, thermally or in a radiation-induced manner.

## Revendications

1. Procédé de préparation d'une composition de revêtement présentant les caractéristiques suivantes :
on effectue, par addition d'eau ou d'humidité, une condensation hydrolytique d'au moins les composants suivants :
a) au moins un silane organiquement modifié répondant à la formule générale I,
R'ₘSiX₍₄₋ₘ₎ (I)
dans laquelle les radicaux sont identiques ou différents et ont la signification suivante :
X représente hydrogène, halogène, alcoxy, acyloxy, alkylcarbonyle, alcoxycarbonyle ou -NR"₂, R " représentant hydrogène et/ou alkyle;
R' représente alkyle, alcényle, alcinyle, aryle, arylalkyle, alkylaryle, arylalcényle, alcénylaryle, arylalcinyle ou alcinylaryle, ces radicaux pouvant être interrompus par des atomes d'oxygène et/ou de soufre et/ou par le groupe -NR" et pouvant porter un ou plusieurs substituant(s) appartenant au groupe des halogènes et des groupes amino, amide, aldéhyde, céto, alkylcarbonyle, carboxy, mercapto, cyano, hydroxy, alcoxy, alcoxycarbonyle, acide sulfonique, acide phosphorique, (méth)acryloxy, époxy ou vinyle, éventuellement substitués ;
m a pour valeur 1, 2 ou 3,
en utilisant au moins un silane organiquement modifié répondant à la formule I comportant au moins un radical R', qui contient au moins un groupe (poly)additionnable et/ou polymérisable, dans une proportion de 2 à 95 moles %, rapporté au nombre de moles total des composants de départ monomères ;
b) au moins un composé métallique répondant aux formules générales II et/ou III,
AlR₃ (II) MR₄ (III)
dans lesquelles les radicaux sont identiques ou différents et ont la signification suivante :
M représente zirconium ou titane,
R représente halogène, alkyle, alcoxy, acyloxy, hydroxy ou un coordinat chélate, en utilisant les composés répondant aux formules (II) et/ou (III) dans une proportion de 5 à 75 moles %, rapporté au nombre de moles total des composants de départ monomères ;
c) au moins un silane organiquement modifié répondant à la formule générale IV,
R"'ₘSiX₍₄₋ₘ₎ (IV)
dans laquelle les radicaux sont identiques ou différents et ont la signification suivante :
R"' représente alkyle, alcényle, alcinyle, aryle, aylalkyle, alkylaryle, arylalcényle, alcénylaryle, arylalcinyle ou alcinylaryle, ces radicaux pouvant être interrompus par des atomes d'oxygène et/ou de soufre et/ou par le groupe -NR" et pouvant porter un ou plusieurs substituant(s) appartenant au groupe des halogènes, et des groupes amino, amide, aldéhyde, céto, alkylcarbonyle, carboxy, mercapto, cyano, hydroxy, alcoxy, alcoxycarbonyle, acide sulfonique, acide phosphorique, (méth)acryloxy, époxy ou vinyle, éventuellement substitués, le radical R"' étant au moins partiellement fluoré ;
X représente hydrogène, halogène, alcoxy, acyloxy, alkylcarbonyle, alcoxycarbonyle ou -NR"₂, R " représentant hydrogène et/ou alkyle ;
m a pour valeur 1, 2 ou 3,
en utilisant les composés répondant à la formule générale (IV) dans une proportion de 0,05 à 50 moles %, rapporté au nombre de moles total des composants de départ monomères ;
- on effectue la condensation hydrolytique des composants a) à c), soit en mélangeant le(les) composé(s) répondant à la formule IV avant l'addition d'eau ou d'humidité avec les composés répondant aux formules I et II et/ou III puis ensuite en hydrolysant et en condensant ensemble les composés répondant aux formules I, II et/ou III et IV, soit en hydrolysant et en condensant d'abord les composés répondant aux formules I, II et/ou III et en ajoutant ensuite le(les) composé(s) répondant à la formule IV au condensat résultant ;
- on laisse réagir, après addition des composés répondant à la formule IV, le mélange résultant pendant au moins 4 heures à des températures d'au moins 20 °C;
- on ajoute, avant, pendant ou après la condensation hydrolytique, un monomère et/ou un oligomère et/ou un pré-polymère polyadditionnable et /ou copolymérisable avec le radical R' du composé répondant à la formule générale I, dans une proportion de 2 à 70 moles %, rapporté au nombre de moles total des composants de départ monomères.

2. Procédé selon la revendication 1,
**caractérisé en ce qu'**
on utilise comme autre(s) composant(s), en plus des composants a) à c), au moins un oxyde peu volatil ou un composé formant un oxyde peu volatil de ce genre, le cas échéant soluble dans le milieu réactionnel, d'éléments des groupes principaux Ia à Va ou de leurs groupes secondaires IIb, IIIb, IVb à VIIIb du système périodique, à l'exception de l'aluminium.

3. Procédé selon la revendication 1 ou 2,
**caractérisé en ce qu'**
on effectue la condensation hydrolytique en présence d'un catalyseur de condensation.

4. Procédé selon une ou plusieurs des revendications 1 à 3
**caractérisé en ce qu'**
on effectue la condensation hydrolytique en présence d'un solvant.

5. Procédé selon une ou plusieurs des revendications 1 à 4,
**caractérisé en ce que**
la quantité d'eau utilisée pour la condensation hydrolytique est introduite au moyen d'adsorbants chargés d'humidité, de solvants organiques aqueux, d'hydrates de sels ou de systèmes formant de l'eau.

6. Procédé selon une ou plusieurs des revendications 1 à 5,
**caractérisé en ce qu'**
on ajoute, avant, pendant ou après la condensation hydrolytique, un ou plusieurs additif(s) qui sont choisis parmi des agents diluants organiques, des agents d'étalement, des colorants, des stabilisants UV, des charges, des ajusteurs de viscosité, des lubrifiants, des agents mouillants, des agents anti-sédimentation, ou des inhibiteurs d'oxydation.

7. Procédé selon une ou plusieurs des revendications 1 à 6,
**caractérisé en ce qu'**
on ajoute, avant, pendant ou après la condensation hydrolytique, un ou plusieurs pigment(s) d'une granulométrie de 1 à 6 µm, dans une proportion de 0,5 à 8 % en poids.

8. Procédé selon une ou plusieurs des revendications 1 à 6,
**caractérisé en ce qu'**
on ajoute, avant, pendant ou après la condensation hydrolytique, un ou plusieurs pigment(s) dans une proportion supérieure à 25 % en poids.

9. Procédé selon une ou plusieurs des revendications 1 à 8,
**caractérisé en ce qu'**
on ajoute le composé répondant à la formule I dans une proportion de 20 à 90 moles %, rapporté au nombre de moles total des composant de départ monomères.

10. Procédé selon une ou plusieurs des revendications 1 à 9,
**caractérisé en ce qu'**
on ajoute les composés répondant aux formules II et/ou III dans une proportion de 5 à 60 moles %, rapporté au nombre de moles total des composants de départ monomères.

11. Procédé selon une ou plusieurs des revendications 1 à 10,
**caractérisé en ce qu'**
on ajoute les composants répondant à la formule IV dans une proportion de 0,1 à 10 moles %, rapporté au nombre de moles total des composants de départ monomères.

12. Procédé selon une ou plusieurs des revendications 1 à 11,
**caractérisé en ce qu'**
on fait réagir, après l'addition des composés répondant à la formule IV, le mélange résultant pendant au moins 4 heures à une température d'au moins 40 °C.

13. Procédé selon une ou plusieurs des revendications 1 à 12,
**caractérisé en ce qu'**
on laisse réagir, après l'addition des composés répondant à la formule IV, le mélange résultant pendant au moins 24 heures à une température d'au moins 10 °C.

14. Procédé selon une ou plusieurs des revendications 1 à 13,
**caractérisé en ce qu'**
on utilise en c) un composé IV présentant un radical R"' aliphatique et/ ou aromatique partiellement fluoré.

15. Procédé selon une ou plusieurs des revendications 1 à 14
**caractérisé en ce qu'**
on utilise en c) un composé IV comportant un radical R"' aliphatique et/ ou aromatique perfluoré.

16. Procédé pour la préparation d'un revêtement anti-adhésif sur des substrats,
**caractérisé en ce qu'**
on prépare une composition de revêtement selon une ou plusieurs des revendications 1 à 13, on ajoute le cas échéant un ou plusieurs catalyseur(s) de durcissement, on applique la composition de revêtement sur un substrat et on durcit par voie chimique, thermique ou induite par irradiation.
